# FASCICULE DE BREVET EUROPEEN

(11) **EP 1 675 257 B1**
(45) Date de publication et mention de la délivrance du brevet: **18.11.2009**
(21) Numéro de dépôt: 05292732.4
(22) Date de dépôt: 19.12.2005
(51) Int. Cl.: H03G 3/30, H04B 1/04, H03F 1/02, H04W 24/02

(54) **Procédé et système d'autocalibration d'une chaîne d'émission d'un terminal mobile par l'utilisation d'un récepteur embarqué**
Verfahren und System zur Selbstkalibrierung einer Sendekette eines Mobilendgerätes mittels der Benutzung von einem eingebauten Empfänger
Method and system for self-calibrating the transmission chain of a mobile terminal through the use of an integrated receiver

(30) Priorité: 22.12.2004 FR 0413729
(43) Date de publication de la demande: 28.06.2006
(73) Titulaire: Sagem Mobiles, 75015 Paris (FR)
(72) Inventeur: Blancho, François, 75019 Paris (FR)
(74) Mandataire: Debay, Yves

(56) Documents cités:
- EP-A- 1 185 009
- WO-A-02/061965
- DE-A1- 10 120 514
- DE-A1- 10 260 291
- GB-A- 2 393 595
- US-A1- 2004 198 263

## Description

### DOMAINE TECHNIQUE DE L'INVENTION

La présente invention se rapporte au domaine des télécommunications en radiotéléphonie mobile. L'invention concerne plus particulièrement un procédé et un système d'autocalibration d'une chaîne d'émission d'un terminal mobile destiné notamment à fonctionner selon la norme UMTS, par l'utilisation d'un récepteur UMTS ou GSM embarqué.

Dans un système de communication sans fil, une station de base communique avec une pluralité de terminaux distants, tels que des téléphones mobiles cellulaires. Les accès multiples par division de fréquence (FDMA : "Frequency-Division multiple Access" en langue anglaise) et les accès multiples par division temporelle (TDMA : "Time-Division multiple Access" en langue anglaise) sont les schémas d'accès multiple traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans interférence.

Les téléphones fonctionnant selon la norme GSM (Global System for Mobile Communications) appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Systèmes à accès multiple par division de code ; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise ; CDMA-large bande) ou la norme IS-95.

Dans les systèmes CDMA, il peut être distingué les systèmes utilisant une fréquence distincte pour l'émission et la réception (système CDMA-FDD) et ceux qui utilisent une fréquence commune pour l'émission et la réception, mais des domaines temporels distincts pour l'émission et la réception (système CDMA-TDD)

L'invention s'applique avantageusement aux systèmes de communication du type CDMA, et plus particulièrement aux systèmes du type CDMA-FDD. Ceci étant, l'invention s'applique également aux systèmes de communication permettant une communication FDMA et TDMA, en particulier à des téléphones dotés de fonctionnalités GSM et GPRS, et plus généralement aux terminaux fonctionnant selon la norme UMTS qui doivent être capables par exemple de fonctionner à la fois sous un système CDMA, comme le système WCDMA et sous un système FDMA et TDMA.

### ARRIERE-PLAN TECHNOLOGIQUE DE L'INVENTION

II est connu dans l'état de la technique des téléphones mobiles généralement pourvus d'un amplificateur de puissance pour l'émission, cet amplificateur de puissance ayant une large plage de fonctionnement de puissance radiofréquence. La puissance d'émission délivrée par l'amplificateur de puissance peut varier dans une plage de puissance prédéterminée et être ajustée en fonction d'informations de puissance régulièrement reçues par le téléphone et en provenance de la station de base.

Actuellement, l'amplificateur de puissance est conçu de façon à présenter l'efficacité la plus grande pour la puissance d'émission maximale. Par contre, pour les puissances intermédiaires ou basses, il se produit une détérioration significative de l'efficacité puisque le courant de repos de l'amplificateur ne change pas, tandis que la puissance émise décroît. Ainsi, dans ces modes de fonctionnement à puissance moindre, l'efficacité, c'est-à-dire le rendement, décroît de façon drastique jusqu'à des valeurs inférieures au pourcent. Il en résulte une perte d'énergie au niveau de la batterie, ce qui diminue sa durée de vie.

Plusieurs solutions ont été proposées pour optimiser le rendement des amplificateurs de puissance. Une méthode répandue est l'adaptation du niveau d'alimentation en tension et/ou en courant de l'amplificateur de puissance en fonction de la puissance de sortie à fournir. Des points de fonctionnement sont déterminés lors du développement d'un terminal mobile UMTS destiné à être fabriqué en grande série, de façon à garantir une linéarité "cible" de l'amplificateur indépendamment des conditions d'utilisations. Les points de fonctionnement sont ainsi déterminés de façon à garantir la linéarité "cible" de l'amplificateur quel que soit le lot d'amplificateurs de puissance montés dans le système et la marge de linéarité est nécessairement confortable dans les conditions habituelles d'utilisation puisqu'une bonne linéarité doit être assurée même dans les conditions d'utilisation les plus extrêmes au niveau de la température, de la tension de la batterie et de la fréquence d'émission du terminal mobile.

Ce type de méthode prévoit donc, à l'issue de la caractérisation du lot d'amplificateurs de puissance en conditions extrêmes, des points de fonctionnement par défaut déterminés en fonction du niveau de puissance à émettre. Le défaut principal d'une telle méthode est que l'amplificateur conservera la plupart du temps une marge de linéarité inutile qui dégrade son efficacité. Avec un rendement amoindri, l'énergie est en grande partie gaspillée, ce qui diminue la durée de vie de la batterie.

II est également connu par le document US 6 166 598 un circuit d'amplification de puissance doté d'un amplificateur de puissance produisant un signal amplifié à partir d'un signal d'entrée, d'un détecteur de crête-moyenne couplé à une sortie de l'amplificateur de puissance et prévu pour détecter des niveaux de crête du signal amplifié et un niveau moyen du signal amplifié, de façon à fournir une indication des niveaux de crête et une indication du niveau moyen. Le détecteur utilisé ce type de circuit mesure la puissance mais pas l'ACLR. Le document WO 02/061965 propose une méthode d'estimation du ratio ACLR (ACPR) à l'aide d'un algorithme complexe de traitement du signal (time varying) pour contrôler une tension d'alimentation de l'amplificateur de puissance. Un inconvénient de cette méthode est la nécessité de prévoir un détecteur spécifique (composant supplémentaire).

### DESCRIPTION GENERALE DE L'INVENTION

La présente invention a donc pour objet de supprimer un ou plusieurs des inconvénients de l'art antérieur en définissant un procédé d'autocalibration de la chaîne d'émission d'un terminal de télécommunications permettant d'optimiser de façon autonome le rendement de l'amplificateur de puissance sans affecter la qualité du service transmis et sans provoquer notamment de distorsion du signal.

A cet effet, l'invention concerne un procédé tel que défini dans la revendication 1.

Ainsi de manière avantageuse, l'invention permet une optimisation du point de fonctionnement de l'amplificateur de puissance tout en respectant la norme UMTS qui spécifie des valeurs d'ACLR (Adjacent Channel Leakage Ratio) à un niveau défini. En outre, il n'est pas nécessaire d'ajouter un composant de détection supplémentaire.

Un autre objet de l'invention est de supprimer un ou plusieurs des inconvénients de l'art antérieur en définissant un terminal permettant d'optimiser l'amplificateur de puissance quelles que soient les conditions d'utilisation.

A cet effet, l'invention propose un terminal de télécommunication tel que défini dans la revendication 18.

L'invention, avec ses caractéristiques et avantages, ressortira plus clairement à la lecture de la description faite en référence aux dessins annexés dans lesquels :
- la figure 1 illustre de façon schématique une architecture du principe d'un téléphone mobile cellulaire selon l'invention, et plus particulièrement la chaîne d'émission et l'étage amplificateur de puissance ;
- la figure 2 montre le plan de fréquence GSM, DCS, PCS et UMTS ;
- la figure 3 représente schématiquement un organigramme d'un mode de mise en oeuvre du procédé selon l'invention, permettant d'ajuster de façon optimale le point de fonctionnement de l'amplificateur de puissance ;
- la figure 4 illustre un premier mode de réalisation du principe d'un téléphone mobile cellulaire utilisant un récepteur de type UMTS ;
- la figure 5 montre le principe de la mesure d'ACLR (Adjacent Channel Leakage Ratio) ou ACPR (Adjacent Channel Power Ratio) ;
- la figure 6 illustre un logigramme de mesure, pour une fréquence donnée, de la puissance d'un signal UMTS émis en bande I par un récepteur UMTS configuré en bande II ;
- la figure 7 illustre de façon schématique un second mode de réalisation du principe d'un téléphone mobile cellulaire selon l'invention, dans lequel un récepteur de type GSM est utilisé pour l'autocalibration ; et
- la figure 8 illustre un logigramme de mesure, pour une fréquence donnée, de la puissance d'un signal UMTS reçu par un récepteur GSM en bande PCS.

### DESCRIPTION DES MODES DE REALISATION PREFERES DE L'INVENTION

Le terminal de télécommunications (1), tel qu'un téléphone mobile cellulaire pouvant communiquer avec un réseau de radiotéléphonie via une station de base, comprend au moins un premier ensemble d'émission et réception doté d'une antenne (11). L'invention prévoit un récepteur, distinct ou non de l'ensemble d'émission et réception susmentionné, permettant de mesurer un signal représentatif de la puissance d'émission en provenance de l'antenne (11). Le terminal (1) est équipé d'un moyen d'amplification (2) capable de couvrir une plage de puissances prédéterminée, alors que l'antenne (11) assure l'émission des signaux dans une bande de fréquence d'émission déterminée (UMTSTx).

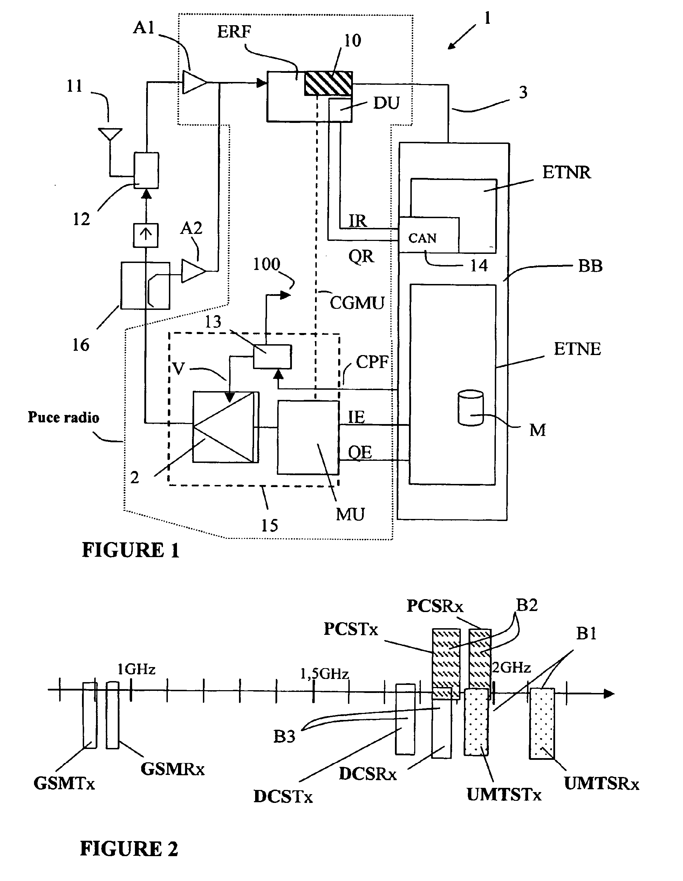

Dans le mode de réalisation de la figure 1, une puce radio (circuit intégré) peut être intercalée entre un organe commutateur duplexeur (12) de type UMTS connecté à l'antenne (11) et un bloc de traitement de type numérique. La puce radio incorpore deux voies, émission (IE, QE) et réception (IR, QR), ainsi qu'une partie synthèse de fréquence (SR, SE) dotée d'au moins une boucle à verrouillage de phase. Le bloc de traitement (BB), par exemple du type microprocesseur pourvu d'un programme adéquat, permet de traiter l'information en bande de base. Ce bloc de traitement en bande de base (BB) comporte au moins un étage de traitement de réception (ETNR) incluant un démodulateur et au moins un étage de traitement d'émission (ETNE) incluant un modulateur. Au moins un convertisseur (14) analogique/numérique est prévu pour les voies de réception (IR, QR) avant le traitement dans l'étage de traitement numérique en réception (ETNR). La puce radio du terminal mobile de télécommunication (1) peut par exemple gérer de deux à quatre standards parmi les standards suivants : GSM, DCS, PCS et UMTS. La figure 2 montre le plan de fréquence pouvant être obtenu avec notamment les superpositions de bandes entre l'émission et la réception.

Dans un mode de réalisation préféré de l'invention, la puce radio est dotée en outre d'un module interface de programmation (10) fournissant des commandes de contrôle de gain (CGDU, CGMU) pour contrôler à la fois le gain du démodulateur UMTS (DU) et le gain du modulateur UMTS (MU). Pour pouvoir effectuer une autocalibration de la chaîne d'émission UMTS (15), le terminal de télécommunication (1) est doté d'un récepteur mesurant dans la bande de fréquence d'émission (UMTSTx) des informations représentatives de la puissance moyenne d'émission des signaux émis.

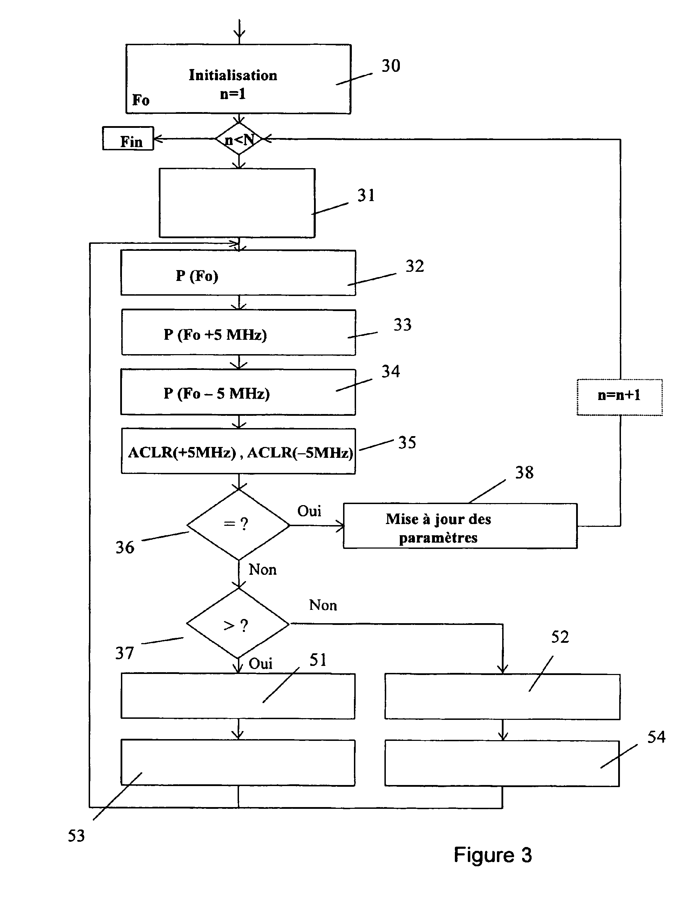

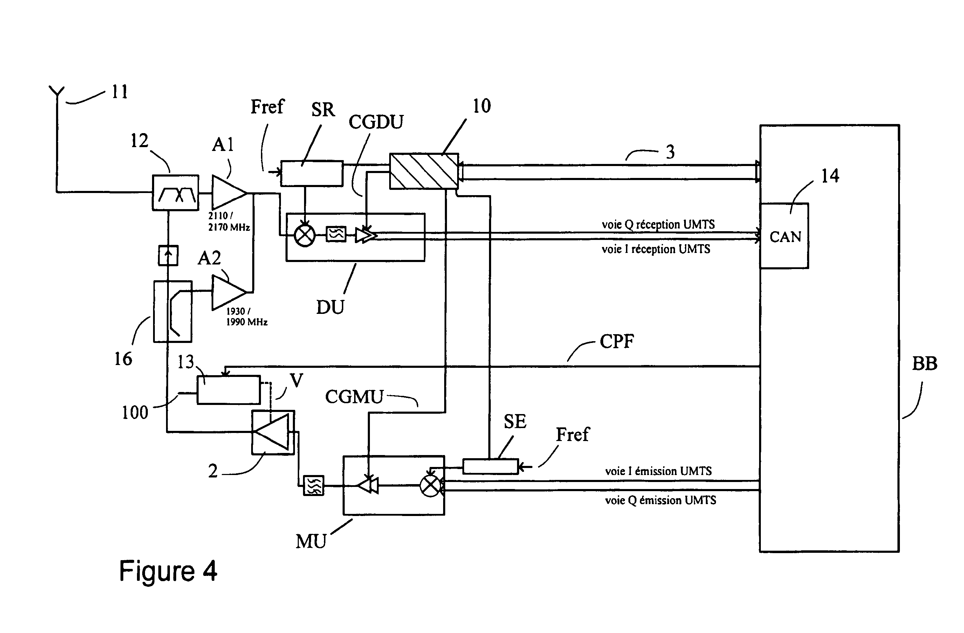

Dans un premier mode de réalisation de l'invention, l'étape de mesure (32, 33, 34, figure 3) utilise un coupleur radiofréquence (16) disposé avant l'entrée du duplexeur (12) pour envoyer un signal représentatif de la puissance d'émission vers un étage analogique radiofréquence (ERF, figure 1). Habituellement, un amplificateur large bande (A1 ) de type LNA (Low Noise Amplifier) permet d'amplifier les signaux reçus par l'organe commutateur duplexeur (12), le signal étant ensuite filtré pour ne laisser passer que la bande utile du signal. Dans le procédé selon l'invention, le signal servant à évaluer la puissance d'émission n'est pas traité de cette façon. En référence aux figures 1 et 4, l'implémentation prévoit d'utiliser la capacité d'un modulateur/démodulateur UMTS à supporter les bandes I et II de l'UMTS (multibande). Le tableau de fonctionnement en fréquence ci-dessous montre que le terminal (1) de l'invention peut utiliser le démodulateur (DU) pour recevoir des signaux émis dans une bande de fréquence d'émission déterminée (UMTSTx). Cela correspond à un fonctionnement en bande I du terminal (B1, figure 2). Deux autres bandes (B2, B3, figure 2) peuvent être utilisées pour un terminal tri-bandes. Un terminal (1) à fonctionnement de type multibande peut donc réceptionner ses propres signaux émis pour permettre l'optimisation du fonctionnement du moyen d'amplification (2) constitué par l'amplificateur de puissance UMTS. La chaîne d'émission (15) avec l'amplificateur (2) utilisé en bande I (B1) va générer des signaux détectables aux fréquences 1920 - 1980 MHz. La détection est en effet permise grâce au démodulateur (DU) qui détecte via une dérivation du coupleur radiofréquence (16) l'émission du terminal. Pour cela, l'organe récepteur UMTS est paramétré en bande II (B2), pour des fréquences 1930 -1990 MHz.

**Table 5.0: bande de fréquences UTRA FDD**

| **Bande opérationnelle** | **Fréquences de transmission pour le terminal** | **Fréquences de réception pour le terminal** |
|---|---|---|
| I | **1920 -1980 MHz** | 2110 -2170 MHz |
| II | 1850 -1910 MHz | **1930 -1990 MHz** |
| III | 1710-1785 MHz | 1805-1880 MHz |

Le terminal (1) selon l'invention dispose avantageusement de moyens d'évaluation de la qualité d'émission des signaux. Ces moyens d'évaluation permettent de déterminer qualitativement, en fonction d'un seuil de spécification du type ACLR, la linéarité de ces signaux.

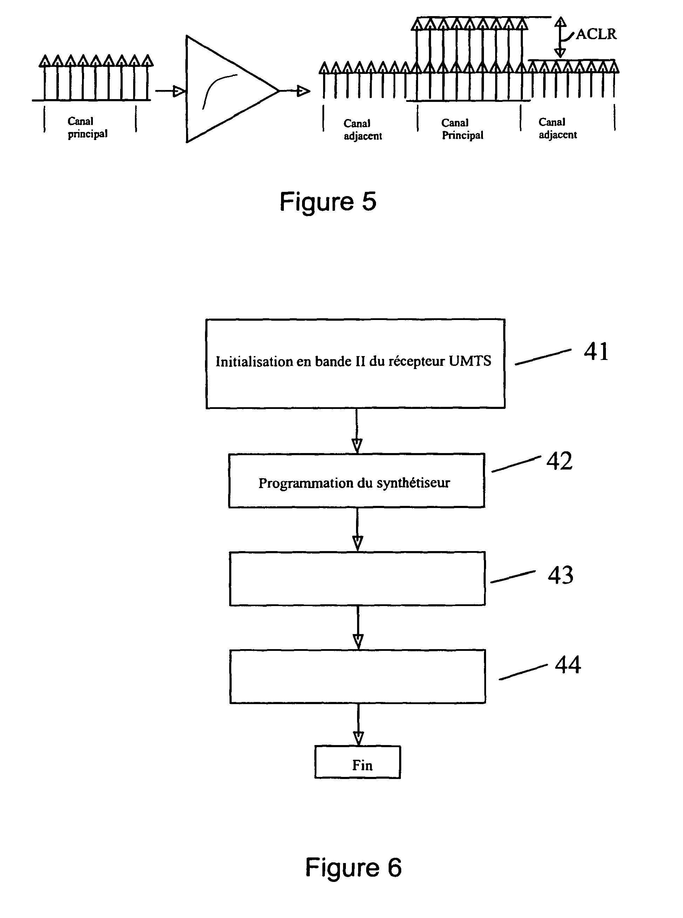

Le paramètre ACLR, comme illustré à la figure 5, est défini comme étant le rapport entre la puissance moyenne dans le canal utilisé (intégrée sur la largeur du canal) et la puissance moyenne dans un des deux canaux adjacents (également intégrée sur la largeur du canal). L'ACLR (appelé aussi ACPR) caractérise donc l'influence d'une porteuse donnée sur les canaux adjacents (5 MHz) et est généralement exprimé en dB par rapport à la porteuse (dBc), de sorte qu'il convient de prendre 10 fois le logarithme du rapport énoncé dans la définition. Un paramètre voisin de l'ACLR est le NPR (Noise Power Ratio) qui caractérise aussi une remonté de l'intermodulation. L'invention vise une optimisation du point de fonctionnement de l'amplificateur de puissance tout en respectant la norme UMTS qui spécifie des valeurs d'ACLR (Adjacent Channel Leakage Ratio) à - 33 dB par rapport à la porteuse (dBc) pour les classes de puissances 21 dBm et 24 dBm au niveau du terminal.

En référence à la figure 3, le procédé d'autocalibration de la chaîne d'émission (15) d'un terminal mobile UMTS prévoit au préalable une étape (30) d'initialisation de l'émetteur UMTS pour générer un signal à une fréquence prédéterminée et ayant une puissance peu élevée correspondant à un premier palier (n=1) de puissance défini. Une table stockée dans une mémoire (M) du terminal permet d'associer un gain de récepteur à un niveau correspondant de puissance d'émission. L'étage analogique radiofréquence (ERF) est initialisé pour recevoir des signaux dans la bande de fréquence correspondant sensiblement à la bande de fréquence d'émission (UMTSTx) utilisée par le modulateur-démodulateur du terminal (1).

Après que le gain du modulateur (MU) et le point de fonctionnement de l'amplificateur (2) ont été appliqués, le terminal peut démarrer une étape de mesure (32, 33, 34) utilisant le récepteur du terminal de télécommunication (1). Dans le mode de réalisation des figures 1 et 4, c'est le récepteur UMTS qui effectue des mesures dans la bande de fréquence d'émission (UMTSTx) pour mesurer des informations représentatives de la puissance moyenne d'émission des signaux émis. En référence à la figure 3, l'étape de mesure (32, 33, 34) comprend ainsi une étape (31) de mesure de la puissance dans un canal de fréquence centrale prédéterminée, puis des étapes de mesure respectives (33, 34) de la puissance reçue sur le canal adjacent de fréquence centrale supérieure d'un incrément déterminé, par exemple 5 MHz, au-dessus de la fréquence prédéterminée et de la puissance reçue sur le canal adjacent de fréquence centrale inférieure d'un incrément déterminé, par exemple 5 MHz, au-dessous de la fréquence prédéterminée.

Il s'ensuit une étape d'évaluation (35, 36, 37) de la qualité d'émission des signaux comprenant l'évaluation qualitative, en fonction d'un seuil de spécification du type ACLR, de la linéarité des signaux émis. Dans le mode de réalisation de la figure 3, un module de calcul du bloc de traitement (BB) réalise une étape (35) de détermination, à l'aide des informations mesurées, de deux ratios ACLR. Le premier ratio calculé correspond donc au rapport entre le niveau de puissance moyenne dans le canal utilisé pour l'émission et le niveau de puissance moyenne dans le canal d'émission adjacent de fréquence centrale inférieure d'un incrément déterminé, par exemple -5MHz, le second ratio calculé correspondant au rapport entre le niveau de puissance moyenne dans le canal utilisé pour l'émission et le niveau de puissance moyenne dans le canal d'émission adjacent de fréquence centrale supérieure d'un incrément déterminé, par exemple +5MHz.

Ladite étape d'évaluation (35, 36, 37) comporte ensuite une étape (36, 37) de comparaison à un seuil spécifié, qui est par exemple de l'ordre de 33 dBc, du ratio le plus élevé obtenu lors du calcul des deux ratios (ACLR). Cette comparaison permet d'évaluer si le point de fonctionnement de l'amplificateur de puissance (2) peut être abaissé sans altération des signaux émis (la puissance d'émission devant par ailleurs rester constante). Si l'ACLR est supérieur par exemple à un seuil de 33 dBc, cela signifie qu'une bonne linéarité est certes obtenue mais le rendement de l'amplificateur de puissance (2) n'est certainement pas optimisé. Comme illustré à la figure 3, si le ratio ACLR atteint a un niveau optimal égal au seuil de spécification, alors les paramètres constitués par la valeur du point de fonctionnement de l'amplificateur (1) et la valeur du gain du modulateur (MU) seront conservés et appliqués via une mise à jour (38) pour obtenir un niveau de puissance optimisé. Un module interface de programmation (10) permet notamment d'ajuster les paramètres de gain du modulateur (MU) et du démodulateur (DU).

Si l'étape (37) de comparaison montre que l'ACLR maximum calculé dépasse l'objectif souhaité, alors le bloc de traitement en bande de base (BB) initie une étape (51) d'abaissement de la tension d'alimentation (V) du moyen d'amplification (2) du circuit d'émission. Ce moyen d'amplification (2) est du type amplificateur de puissance dont le point de fonctionnement peut être ajusté en modifiant la tension d'alimentation (V) ou le courant d'alimentation. Ainsi, ladite étape (51) d'abaissement de la tension d'alimentation (V) permet de régler la valeur du gain de l'amplificateur de puissance en fonction des informations mesurées. Tant que ladite étape d'évaluation (35, 36, 37) de qualité indique que la linéarité obtenue est supérieure à la linéarité seuil souhaitée, cette étape (51) d'abaissement de la tension d'alimentation (V) du moyen d'amplification (2) peut être réitérée. Le bloc de traitement en bande de base (BB), en fonction du résultat de l'étape de comparaison (36, 37), envoie en effet une commande de contrôle (CPF) du point de fonctionnement de l'amplificateur de puissance (2). En référence aux figures 1 et 4, l'ajustement de la tension d'alimentation (V) de l'amplificateur de puissance (2) est réalisé par l'intermédiaire d'un convertisseur de tension (13) disposé entre le microprocesseur de traitement en bande de base (BB), la sortie d'alimentation en tension (100) reliée à la source d'alimentation du terminal (1), et ledit amplificateur de puissance (2). La source d'alimentation est constituée par exemple d'une batterie logée dans un compartiment spécifique du terminal de télécommunication (1).

En référence à la figure 1, l'étage de traitement numérique de l'émission (ETNE) disposé dans le bloc de traitement (BB) peut fournir les données de contrôle (CPF) au convertisseur de tension (13). Dans une variante de réalisation de l'invention, une calibration de la puissance émise par le terminal de télécommunications (1) est préalablement réalisée dans des conditions déterminées de référence pour stocker dans la mémoire (M) du terminal (1) une table de correspondance entre la puissance émise par la chaîne d'émission UMTS et le gain du récepteur lorsque ce dernier reçoit un signal de dérivation issu de la chaîne d'émission. Dans une autre variante, on peut stocker une table de correspondance entre le ratio ACLR de puissance émise par la chaîne d'émission UMTS et le gain de l'émetteur, cette table étant utilisée pour fixer la tension d'alimentation (V) de l'amplificateur (2) en fonction du gain de l'émetteur.

Comme illustré à la figure 6, la calibration préliminaire peut être réalisée lors d'une étape (41) d'initialisation du récepteur UMTS en bande II. L'équation « puissance émise par la chaîne UMTS = f(gain du récepteur pour le niveau I/Q de référence) » est déterminée par cette calibration préliminaire, par exemple lors de la fabrication du terminal (1) mobile de télécommunication. Après l'étape (42) de programmation du synthétiseur de fréquence (SR) du récepteur UMTS sur une fréquence déterminée, le module interface de programmation (10) est utilisé dans une étape (43) de mise à niveau pour amener, via la commande de contrôle de gain (CGDU) du démodulateur (MU), le niveau de signal I/Q au niveau I/Q de référence. Une étape (44) de calcul de la puissance émise pour le signal UMTS émis en bande I peut alors être réalisée en prenant en compte le gain du récepteur UMTS auquel on est arrivé à l'issue de l'étape (43) de mise à niveau par simple résolution de l'équation « puissance émise par la chaîne UMTS = f(gain du récepteur) » déterminée lors de la calibration préliminaire. On comprend que le logigramme de mesure de la figure 6 est applicable pour l'étape de mesure (32, 33, 34) illustrée à la figure 3, dans le cas où l'on utilise un récepteur de type UMTS.

Autrement dit, alors que le gain de récepteur est contrôlable par l'intermédiaire du module interface de programmation (10), la calibration préalable de puissance est utilisée pour déduire la puissance d'émission à partir du gain de récepteur. Ce module d'interface (10) permet d'ailleurs de programmer, au niveau du récepteur, une fréquence de référence (Fref) pour un étage analogique radiofréquence (ERF) du type incluant une boucle à verrouillage de phase PLL. Le module d'interface (10) permet en outre de fournir une commande de contrôle de gain (CGDU) à un démodulateur de cet étage analogique radiofréquence (ERF).

Dans un mode de réalisation de l'invention, le module interface de programmation (10) peut prendre en compte le fait que la linéarité évaluée par lesdits moyens d'évaluation est supérieure à la linéarité seuil souhaitée pour déclencher l'abaissement dans ce cas de la tension d'alimentation (V) du moyen d'amplification (2). Pour cela, le module interface de programmation (10) est relié par un bus de contrôle UMTS (3) au bloc de traitement (BB). Le module interface de programmation (10) permet par exemple de compenser, en agissant sur le modulateur (MU), les variations de gain de l'amplificateur de puissance en fonction des informations mesurées. Autrement dit, l'étape (51) illustrée à la figure 3 d'abaissement de la tension d'alimentation (V) du moyen d'amplification (2) peut s'accompagner d'une étape (53) d'augmentation déterminée du gain d'un modulateur (MU) relié à l'entrée du moyen d'amplification (2), de façon à compenser la perte de gain engendrée par la baisse de tension d'alimentation (V) pour le moyen d'amplification (2).

En référence à la figure 3, lorsque le ratio ACLR le plus élevé est inférieur au seuil de spécification, une étape (52) d'augmentation de la valeur du point de fonctionnement de l'amplificateur de puissance (2) est alors déclenchée. Le module interface de programmation (10) permet alors de compenser l'augmentation de gain de l'amplificateur (2) en délivrant à une étape (54) une commande (CGMU) visant à diminuer le gain du modulateur (MU). Après cette étape (54) de compensation, de nouvelles mesures sont effectuées pour permettre une nouvelle évaluation. De même après l'étape (53), comme illustré à la figure 3, de nouvelles mesures doivent être effectuées pour permettre une nouvelle évaluation.

Dans le mode de réalisation de la figure 1, l'étage analogique radiofréquence (ERF) utilise un oscillateur local du type à plage de fonctionnement étendue pour recevoir l'ensemble des signaux émis dans la bande de fréquence d'émission (UMTSTx). Le terminal (1) UMTS étant Full-Duplex, pouvant réaliser des transmissions et réceptions de données indépendantes à deux voies simultanées, on comprend que le fait d'obtenir en réception une plage de fonctionnement qui coïncide avec la bande de fréquence d'émission permet au terminal (1) d'effectuer l'autocalibration selon l'invention, par mesure du signal transmis par l'amplificateur de puissance (2). Un moyen d'isolation (A2) en dehors des phases de mesure à la fréquence d'émission est prévu par exemple entre le coupleur radiofréquence (16) et l'étage analogique radiofréquence (ERF). Cela évite de perturber la réception. L'étape de mesure (32, 33, 34) peut être réalisée avec un récepteur sans filtre de bande en réception.

En référence à la figure 1, le circuit de couplage (16) disposé à la sortie de l'amplificateur de puissance (2) est relié à un amplificateur large bande LNA UMTS (A2) réalisant une fonction d'isolation. Cet amplificateur constitue en effet un moyen d'isolation lorsqu'il ne fonctionne pas et donc permet dans ce cas d'isoler le signal fourni par le circuit de couplage (16) pendant les phases de fonctionnement du terminal (1). Lorsqu'il reçoit par l'intermédiaire du couplage une fraction du signal émis, l'amplificateur LNA UMTS (A2) transmet cette fraction du signal aux moyens d'évaluation permettant de déterminer la qualité d'émission des signaux. La valeur du point de fonctionnement de l'amplificateur de puissance (2) peut être ajustée en fonction du résultat de l'étape de comparaison (36, 37) exécutée par lesdits moyens d'évaluation. La valeur de seuil correspondant au ratio ACLR spécifié par la norme UMTS peut être stockée dans une mémoire (M) du terminal (1).

Les points de fonctionnement de l'amplificateur de puissance (2) peuvent alors être recherchés afin que le ratio ACLR atteigne la valeur cible souhaitée, par exemple 33 dBc. Dans la mesure où le récepteur a déjà été calibré lors de l'étape (41) d'initialisation, un point de mesure ayant été pris en compte pour évaluer l'isolation entre réception et transmission, la fonction de transfert « puissance émise = f(commande de gain) peut être tracée et mémorisée sous forme de table. La puissance d'émission est facilement déduite à partir du gain de récepteur en transmettant au moins un signal destiné à une calibration. Une étape de commutation utilisant un duplexeur radiofréquence (12) est par exemple prévue pour éviter de transmettre le signal de calibration vers l'antenne (11).

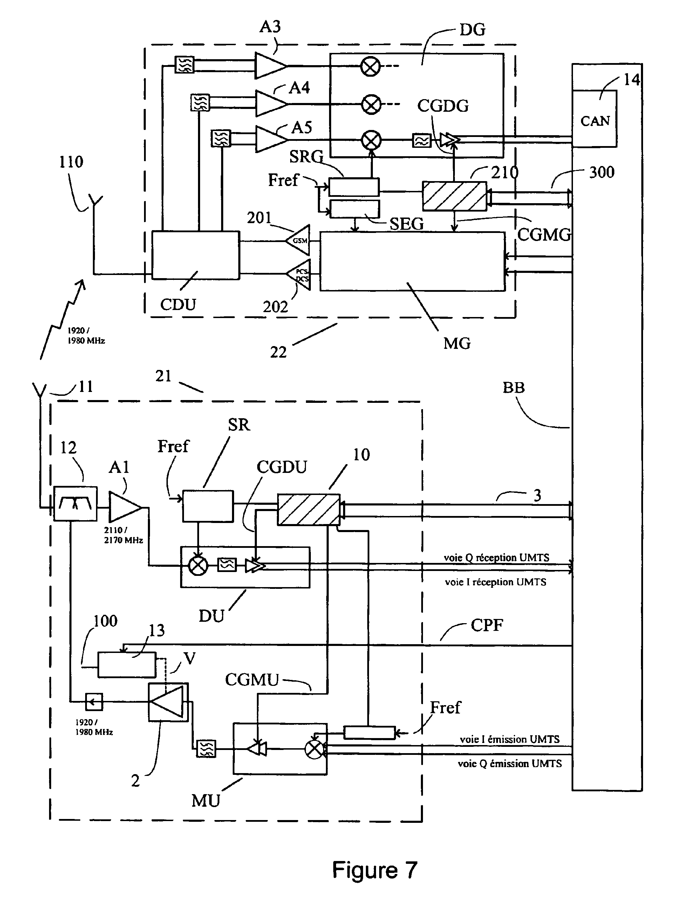

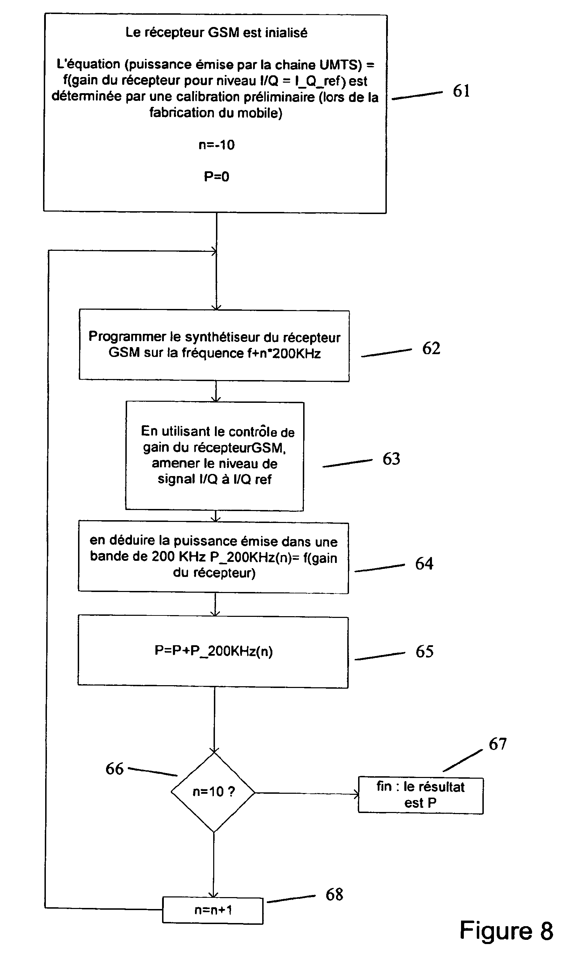

Un second mode de réalisation de l'invention va à présent être décrit en liaison avec les figures 7 et 8.

Dans le mode de réalisation de la figure 7, le terminal (1) dispose d'un récepteur de type GSM qu'il utilise dans la bande radio PCS (Personal Communications System). La manière de réaliser les mesures pour déterminer la puissance émise par la partie UMTS va donc différer par rapport au mode de réalisation avec utilisation d'un récepteur UMTS. En réception, la bande de fréquence PCS s'étend de 1930 à 1990 MHz. Un terminal mobile de type « dual mode », c'est-à-dire pouvant fonctionner aussi bien en GSM ou analogue qu'en UMTS ou standard équivalent, dispose d'une puce radio adaptée à ces différents standards. Comme illustré à la figure 5, le recouvrement de la bande de réception PCS, notamment utilisée Etats-Unis d'Amérique, avec la bande d'émission UMTS utilisée en Europe permet une utilisation du récepteur GSM à des fins de calibration.

Dans l'exemple de la figure 7, une ou plusieurs puces radio spécifiques au moins pour les standards UMTS, GSM et PCS peuvent être intercalées entre le commutateur duplexeur (CDU) connecté à l'antenne (110) et le bloc de traitement de type numérique (BB). Dans un mode de réalisation préféré de l'invention, la puce radio incorpore dans une partie dite GSM (22) deux voies, une en émission et l'autre en réception, ainsi qu'une partie synthèse de fréquence (SRG, SEG) dotée d'au moins une boucle à verrouillage de phase. La puce radio du terminal mobile de télécommunication (1) peut par exemple gérer de trois ou quatre standards, et au moins GSM, PCS et UMTS.

L'étage analogique radiofréquence du récepteur GSM utilise par exemple un oscillateur local du type à plage de fonctionnement étendue pour recevoir l'ensemble des signaux émis dans la bande de fréquence d'émission (UMTSTx). Comme illustré à la figure 7, l'étape de mesure (32, 33, 34) utilise un récepteur GSM (22) relié à une antenne (110) distincte de l'antenne (11) servant à l'émission des signaux. Ce récepteur GSM est préalablement initialisé pour fonctionner dans une bande de fréquences de réception déterminée (PCSRx) correspondant sensiblement à ladite bande de fréquences d'émission (UMTSTx).

La partie radio UMTS (21) peut être analogue à celle de la figure 4, à l'exception du coupleur radiofréquence (16) qui peut être éliminé. La partie radio GSM/DCS/PCS (22) comprend un commutateur duplexeur (CDU) permettant de recevoir une puissance résiduelle d'émission issue de l'antenne (11) UMTS servant à l'émission des signaux. Cette puissance résiduelle d'émission est détectée par un démodulateur (DG) du récepteur GSM. Dans l'exemple de la figure 7, la réception peut être réalisée selon différentes bandes de fréquence, trois amplificateurs large bande (A3, A4, A5) de type LNA étant alors prévus à la sortie du commutateur duplexeur (CDU) d'antenne (110).

La puce radio est dotée en outre d'un module interface de programmation (210) fournissant les commandes de contrôle de gain (CGDG, CGMG) pour contrôler à la fois le gain du démodulateur GSM (DG) et le gain du modulateur GSM (MG). Des amplificateurs respectifs (201, 202) sont prévus pour compléter la chaîne d'émission GSM / PCS et DCS. La boucle à verrouillage de phase PLL prévue pour le démodulateur (DG) du récepteur GSM fait fonctionner ledit démodulateur (DG) dans ladite bande de fréquences d'émission (UMTSTx). Le démodulateur est donc capable de traiter les signaux contenus dans le domaine de fréquence s'étendant de 1920 à 1980 MHz.

En référence à la figure 8, le récepteur GSM doit subir une étape (61) d'initialisation analogue à celle prévue pour le mode de réalisation avec utilisation du récepteur UMTS. Une calibration préliminaire est réalisée pour déterminer la fonction liant la puissance émise au gain du récepteur selon l'équation « puissance émise par la chaîne UMTS = f(gain du récepteur pour le niveau I/Q de référence) », par exemple lors de la fabrication du terminal (1) mobile de télécommunication. La mesure de la puissance se fait en calculant chacune des puissances partielles estimées pour une bande de 200kHz, la sommation rassemblant par exemple une vingtaine de mesures s'étendant autour d'une fréquence déterminée, par exemple 21 mesures dans l'exemple de la figure 8 (n variant de -10 à 10). On peut commencer la première mesure à - 2MHz par rapport à la fréquence déterminée et finir par une mesure à + 2MHz par rapport à la fréquence déterminée.

Pour chaque bande de 200 kHz, après l'étape (62) de programmation du synthétiseur de fréquence (SRG) du récepteur GSM, le module interface de programmation (210) relié au bloc de traitement (BB) par un bus (300) est utilisé dans une étape (63) de mise à niveau pour amener, via la commande de contrôle de gain (CGDG) du démodulateur (DG), le niveau de signal I/Q au niveau I/Q de référence. Une étape de calcul (64) de la puissance émise dans la bande de 200 kHz peut alors être réalisée en prenant en compte le gain du récepteur UMTS auquel on est arrivé à l'issue de l'étape (63) de mise à niveau, par simple résolution de l'équation « puissance émise par la chaîne UMTS = f(gain du récepteur) ». La puissance cumulée pour les différentes bandes de 200 kHz correspond à la fin du calcul à la puissance émise depuis l'antenne (11) de la partie UMTS (21).

On comprend que le logigramme de mesure de la figure 8 est applicable pour l'étape de mesure (32, 33, 34) illustrée à la figure 3, dans le cas où l'on utilise un récepteur de type GSM dans la bande PCS. Ainsi avec deux fois une vingtaine de mesures, on peut obtenir un ratio de type ACLR. Comme vu précédemment aux figures 1 et 4, le gain du modulateur UMTS (MU) est ajusté par l'intermédiaire du module interface de programmation (10) et la tension d'alimentation (V) de l'amplificateur de puissance (2) peut être imposée par la commande de contrôle (CPF). Ainsi comme illustré à la figure 3, le point de fonctionnement de l'amplificateur de puissance (2) peut être diminué tant que ladite étape d'évaluation (35, 36, 37) de qualité indique que la linéarité obtenue est supérieure à la linéarité seuil souhaitée, la perte résultante de gain de l'amplificateur (2) étant compensée par une augmentation du gain du modulateur (MU) utilisé pour l'émission des signaux.

Pour permettre au récepteur de type GSM d'effectuer les mesures, un moyen de limitation de l'isolation (non représenté) est par exemple prévu entre la sortie de l'amplificateur (2) de la partie UMTS et l'entrée du récepteur GSM (l'isolation pouvant être limitée à 40 dB par exemple). Dans des variantes de réalisation, la limitation de l'isolation peut être simplement obtenue en supprimant certains filtres de bande.

Un des avantages de l'invention est de permettre une réduction sensible de la consommation du terminal mobile. En prenant l'hypothèse d'une consommation de terminal hors amplificateur de puissance de 300 mA avec une batterie de 1000 mA/h, l'amélioration entre l'utilisation des paramètres par défaut issus d'une caractérisation figée d'amplificateurs de puissance et des points de fonctionnement auto-adaptatifs est évaluée à 10%.

Un autre des avantages de l'invention est de diviser par deux les temps de calibration de l'émetteur/récepteur car limité à la partie réception du terminal mobile.

## Revendications

1. Procédé d'autocalibration d'une chaîne d'émission d'un terminal de télécommunications (1), tel qu'un téléphone mobile cellulaire, équipé d'un moyen d'amplification (2) en émission capable de couvrir une plage de puissances prédéterminée et d'un bloc de traitement en bande de base (BB), ledit procédé visant à contrôler la puissance d'émission dudit terminal (1) dans la plage de puissances prédéterminée et comprenant une étape d'ajustement de la puissance d'émission lorsque le terminal (1) émet via une antenne (11) des signaux dans une bande de fréquence d'émission déterminée (UMTSTx), **caractérisé en ce que** l'étape d'ajustement de la puissance d'émission comporte :
- une étape de mesure (32, 33, 34) utilisant la fonction récepteur du terminal de télécommunication (1) pour mesurer dans la bande de fréquence d'émission déterminée (UMTSTx) des informations représentatives de la puissance moyenne d'émission des signaux émis ;
- une étape d'évaluation (35, 36, 37) de la qualité d'émission des signaux consistant essentiellement à évaluer qualitativement, en fonction d'un seuil de spécification du type ACLR, la linéarité de ces signaux ;
- tant que ladite étape d'évaluation (35, 36, 37) de qualité indique que la valeur obtenue est supérieure à la valeur de seuil souhaitée, une étape (51) d'abaissement de la tension d'alimentation (V) ou d'abaissement du courant d'alimentation du moyen d'amplification (2) ;
au moins une calibration de la puissance émise par le terminal de télécommunications (1) étant préalablement réalisée dans des conditions déterminées de référence et utilisée pour déduire la puissance d'émission à partir du gain de récepteur, ledit gain de récepteur étant imposé par l'intermédiaire d'un module interface de programmation (10) relié au bloc de traitement en bande de base (BB) et permettant d'une part de programmer, au niveau du récepteur, une fréquence de référence (Fref) pour un étage analogique radiofréquence (ERF) du type incluant une boucle à verrouillage de phase, et d'autre part de fournir une commande de contrôle de gain (CGDU) à un démodulateur de cet étage analogique radiofréquence (ERF).

2. Procédé selon la revendication 1, dans lequel ledit moyen d'amplification (2) est du type amplificateur de puissance dont le point de fonctionnement peut être ajusté en modifiant la tension d'alimentation (V) ou le courant d'alimentation dudit amplificateur, ladite étape (51) d'abaissement de la tension d'alimentation (V) ou du courant d'alimentation étant prévue pour régler la valeur du gain de l'amplificateur de puissance en fonction des informations mesurées.

3. Procédé selon la revendication 1 ou 2, dans lequel l'étape (51) d'abaissement de la tension d'alimentation (V) du moyen d'amplification (2) s'accompagne d'une étape (53) d'augmentation déterminée du gain d'un modulateur (MU) relié à l'entrée du moyen d'amplification (2), de façon à compenser la perte de gain engendrée par la baisse de tension d'alimentation (V) pour le moyen d'amplification (2).

4. Procédé selon une des revendications 1 à 3, dans lequel la valeur du gain et la tension d'alimentation (V) sont maintenues inchangées tant que l'étape d'évaluation (35, 36, 37) de la qualité d'émission des signaux indique que la valeur obtenue correspond à la valeur de seuil souhaitée.

5. Procédé selon une des revendications 1 à 4, dans lequel l'étape d'évaluation (35, 36, 37) de la qualité d'émission des signaux comprend :
- une étape (35) de détermination, en fonction des informations mesurées, de deux ratios entre un premier niveau de puissance moyenne dans le canal utilisé pour l'émission et respectivement l'un ou l'autre de deux seconds niveaux de puissance moyenne pour les canaux d'émission adjacents au canal utilisé ; et
- une étape (36, 37) de comparaison au seuil de spécification du ratio le plus élevé obtenu lors de ladite étape de détermination (35), pour permettre d'évaluer si le point de fonctionnement de l'amplificateur de puissance (2) peut être abaissé sans altération des signaux émis.

6. Procédé selon une des revendications 2 à 5, dans lequel un étage de traitement (ETNE) réalisé dans le bloc de traitement en bande de base (BB) fournit des données de contrôle (CPF) à un convertisseur de tension (13) pour contrôler le point de fonctionnement de l'amplificateur de puissance (2), le convertisseur de tension (13) recevant la sortie d'alimentation en tension (100) d'une source d'alimentation du terminal (1).

7. Procédé selon une des revendications 1 à 6, **caractérisé par le fait que** l'étape de mesure (32, 33, 34) comporte une étape de dérivation de signaux utilisant un coupleur radiofréquence (16) pour envoyer un signal représentatif de la puissance d'émission vers un étage analogique radiofréquence (ERF).

8. Procédé selon la revendication 7, dans lequel l'étage analogique radiofréquence (ERF) est initialisé pour recevoir des signaux dans une bande de fréquence correspondant sensiblement à la bande de fréquence d'émission (UMTSTx) utilisée par le modulateur-démodulateur du terminal (1).

9. Procédé selon la revendication 7 ou 8, dans lequel ladite calibration de la puissance émise par le terminal de télécommunications (1) est réalisée pour stocker dans une mémoire (M) du terminal (1) une table de correspondance entre la puissance émise par la chaîne d'émission UMTS et la valeur du gain du récepteur.

10. Procédé selon une des revendications 7 à 9, comprenant une étape d'extension de la plage de fonctionnement en réception, l'étage analogique radiofréquence (ERF) utilisant un oscillateur local du type à plage de fonctionnement étendue pour recevoir l'ensemble des signaux émis dans la bande de fréquence d'émission (UMTSTx).

11. Procédé selon une des revendications 7 à 10, comprenant une étape d'isolation à la fréquence d'émission entre le coupleur radiofréquence (16) et l'étage analogique radiofréquence (ERF), l'étape de mesure (32, 33, 34) étant réalisée avec un récepteur sans filtre de bande en réception.

12. Procédé selon une des revendications 9 à 11, dans lequel la puissance d'émission est déduite à partir du gain de récepteur en transmettant au moins un signal destiné à une calibration, une étape de commutation utilisant un duplexeur radiofréquence (12) étant prévue pour éviter de transmettre le signal de calibration vers l'antenne (11).

13. Procédé selon une des revendications 1 à 6, **caractérisé par le fait que** l'étape de mesure (32, 33, 34) comprend une étape d'émission de signaux entre une première antenne (11) servant à l'émission des signaux et une seconde antenne (110) reliée à un récepteur GSM (22), une étape d'initialisation dudit récepteur GSM (22) étant préalablement réalisée pour faire fonctionner ce dernier dans une bande de fréquences de réception déterminée (PCSRx) correspondant sensiblement à ladite bande de fréquences d'émission (UMTSTx).

14. Procédé selon la revendication 13, dans lequel le récepteur GSM (22) reçoit par l'intermédiaire d'un commutateur duplexeur (CDU), lors d'une étape de réception des signaux émis, une puissance résiduelle d'émission issue de l'antenne (11) servant à l'émission des signaux, cette puissance résiduelle d'émission étant détectée par un démodulateur (DG) du récepteur GSM.

15. Procédé selon la revendication 14, dans lequel une boucle à verrouillage de phase prévue pour le démodulateur (DG) du récepteur GSM fait fonctionner ledit démodulateur (DG) dans ladite bande de fréquences d'émission (UMTSTx).

16. Procédé selon une des revendications 13 à 15, dans lequel le gain de l'amplificateur de puissance (2) est imposé par l'intermédiaire d'un module interface de programmation (10) relié au bloc de traitement en bande de base (BB).

17. Procédé selon une des revendications 6 à 16, dans lequel le point de fonctionnement de l'amplificateur de puissance (2) est diminué tant que ladite étape d'évaluation (35, 36, 37) de qualité indique que la valeur obtenue est supérieure à la valeur de seuil souhaitée, la perte résultante de gain de l'amplificateur (2) étant compensée par une augmentation du gain du modulateur (MU) utilisé pour l'émission des signaux.

18. Terminal de télécommunication (1) permettant une autocalibration de sa chaîne d'émission de façon à contrôler sa puissance d'émission, équipé d'un bloc de traitement en bande de base (BB), d'un moyen d'amplification (2) en émission capable de couvrir une plage de puissances prédéterminée et d'une antenne (11) pour émettre des signaux dans une bande de fréquence d'émission déterminée (UMTSTx), **caractérisé en ce qu'**il comporte :
- un récepteur pour mesurer dans la bande de fréquence d'émission déterminée (UMTSTx) des informations représentatives de la puissance moyenne d'émission des signaux émis ;
- des moyens d'évaluation de la qualité d'émission des signaux pour évaluer qualitativement, en fonction d'un seuil de spécification du type ACLR, la linéarité de ces signaux ;
- au moins un module interface de programmation (10, 210) relié au bloc de traitement en bande de base (BB) et apte à prendre en compte la comparaison de la valeur évaluée par lesdits moyens d'évaluation avec la valeur de seuil souhaitée pour ajuster le point de fonctionnement du moyen d'amplification (2), ledit module interface de programmation étant prévu pour d'une part programmer, au niveau du récepteur, une fréquence de référence (Fret) pour un étage analogique radiofréquence (ERF) du type incluant une boucle à verrouillage de phase, et d'autre part fournir une commande de contrôle de gain (CGDU) à un démodulateur de cet étage analogique radiofréquence (ERF) ;
- des moyens de calibration préalable de la puissance émise par le terminal (1) dans des conditions déterminées de référence ; et
- des moyens de corrélation permettant de déduire la puissance d'émission à partir du gain de récepteur, ledit gain de récepteur étant imposé par l'intermédiaire du module interface de programmation (10, 210);
le module interface de programmation (10, 210) étant apte à prendre en compte la comparaison de la valeur évaluée par lesdits moyens d'évaluation avec la valeur de seuil souhaitée pour ajuster la tension d'alimentation (V) ou le courant d'alimentation du moyen d'amplification (2).

19. Terminal selon la revendication 18, dans lequel ledit moyen d'amplification est du type amplificateur de puissance (2) dont le point de fonctionnement peut être ajusté en modifiant la tension d'alimentation (V) ou le courant d'alimentation, le module interface de programmation (10) étant prévu pour compenser des variations de gain de l'amplificateur de puissance en fonction des informations mesurées.

20. Terminal selon la revendication 18 ou 19, dans lequel le module interface de programmation (10) est agencé pour fournir, lors de l'abaissement de la tension d'alimentation (V) du moyen d'amplification (2), une commande d'augmentation déterminée du gain à destination d'un modulateur (MU) relié à l'entrée du moyen d'amplification (2), de façon à compenser la perte de gain engendrée par la baisse de tension d'alimentation (V) pour le moyen d'amplification (2).

21. Terminal selon la revendication 20, dans lequel le module interface de programmation (10) maintient la valeur du gain du modulateur (MU) et ladite tension d'alimentation (V) inchangées tant que la valeur évaluée par lesdits moyens d'évaluation correspond à la valeur de seuil souhaitée.

22. Terminal selon une des revendications 19 à 21, comprenant un convertisseur de tension (13) prévu pour ajuster ladite tension d'alimentation (V) et disposé entre les trois éléments suivants :
- un bloc de traitement en bande de base (BB),
- une sortie d'alimentation en tension (100) reliée à une source d'alimentation du terminal (1), et
- ledit amplificateur de puissance (2).

23. Terminal selon la revendication 22, comprenant un étage de traitement (ETNE) disposé dans le bloc de traitement en bande de base (BB) pour délivrer des données de contrôle (CPF) au convertisseur de tension (13) de façon à contrôler le point de fonctionnement de l'amplificateur de puissance (2).

24. Terminal selon une des revendications 19 à 23, comprenant à la sortie de l'amplificateur de puissance (2) un circuit de couplage (16) relié à un moyen d'isolation (A2) commandé pour d'une part isoler le signal fourni par le circuit de couplage (16) pendant les phases de fonctionnement, et d'autre part transmettre par le couplage une fraction du signal émis vers lesdits moyens d'évaluation.

25. Terminal selon une des revendications 19 à 24, comprenant des moyens d'ajustement de la valeur du point de fonctionnement de l'amplificateur de puissance (2) en fonction du résultat de la comparaison fournie par lesdits moyens d'évaluation, la valeur de seuil correspondant à une valeur de spécification du ratio ACLR, ladite valeur de seuil étant stockée dans une mémoire (M) du terminal (1).

## Claims

1. Method of self-calibration of a transmission path of a telecommunications terminal (1), such a cellular mobile telephone, equipped with a means for amplification (2) in transmission capable of covering a predetermined range of powers and with a baseband processing unit (BB), the said method seeking to control the transmission power of the said terminal (1) in the predetermined range of powers and comprising a step of adjustment of the transmission power when the terminal (1) transmits signals in a defined transmission frequency band (UMTSTx) via an antenna (11), **characterised in that** the step of adjustment of the transmission power includes:
- a step of measurement (32, 33, 34) using the receiver function of the telecommunications terminal (1) in order to measure in the defined transmission frequency band (UMTSTx) information representing the average transmission power of the signals emitted;
- a step of evaluation (35, 36, 37) of the transmission quality of the signals consisting essentially of qualitatively evaluating the linearity of these signals as a function of a specification threshold of the ACLR type;
- as long as the said step of quality evaluation (35, 36, 37) indicates that the value obtained is higher than the desired threshold value, a step (51) of lowering the supply voltage (V) or lowering the supply current of the amplification means (2);
at least one calibration of the power transmitted by the telecommunications terminal (1) being carried out beforehand under defined reference conditions and used in order to deduce the transmission power from the receiver gain, the said receiver gain being imposed by means of a programming interface module (10) connected to the baseband processing unit (BB) and making it possible on the one hand to program, at the receiver, a reference frequency (Fref) for an analog radio frequency stage (ERF) of the type including a phase-locked loop, and on the other hand to supply a gain control command (CDU) to a demodulator of this analog radio frequency stage (ERF).

2. Method as claimed in Claim 1, wherein the said amplification means (2) is of the power amplifier type of which the point of operation can be adjusted by modifying the supply voltage (V) or the supply current of the said amplifier, the said step (51) of lowering the supply voltage (V) or lowering the supply current being provided in order to regulate the value of the power amplifier gain as a function of the measured information.

3. Method as claimed in Claim 1 or Claim 2, wherein the step (51) of lowering the supply voltage (V) of the amplification means (2) is accompanied by a step (53) of defined increase of the gain of a modulator (MU) connected to the input of the amplification means (2), in such a way as to compensate for the loss of gain due to the lowering of the supply voltage (V) for the amplification means (2).

4. Method as claimed in any one of Claims 1 to 3, wherein the value of the gain and the supply voltage (V) are kept unchanged so long as the step of evaluation (35, 36, 37) of the transmission quality of the signals indicates that the value obtained corresponds to the desired threshold value.

5. Method as claimed in any one of Claims 1 to 4, wherein the step of evaluation (35, 36, 37) of the transmission quality of the signals comprises:
- a step (35) of determination, as a function of the measured information, of two ratios between a first average power level in the channel used for the transmission and one or the other respectively of two second average power levels for the transmission channels adjacent to the channel used; and
- a step (36, 37) of comparison with the specification of the highest ratio obtained during the said step of determination (35), in order to make it possible to evaluate whether the point of operation of the power amplifier (2) can be lowered without alteration of the transmitted signals.

6. Method as claimed in any one of Claims 2 to 5, wherein a processing stage (ETNE) carried out in the baseband processing unit (BB) supplies control data (CPF) to a voltage converter (13) in order to control the point of operation of the power amplifier (2), the voltage converter (13) receiving the voltage supply output (100) of a supply source of the terminal (1).

7. Method as claimed in any one of Claims 1 to 6, **characterised in that** the step of measurement (32, 33, 34) includes a step of diversion of signals using a radio frequency coupler (16) in order to send a signal representing the transmission power to an analog radio frequency stage (ERF).

8. Method as claimed in Claim 7, wherein the analog radio frequency stage (ERF) is initialised in order to receive signals in a frequency band corresponding substantially to the transmission frequency band (UMTSTx) used by the modulator-demodulator of the terminal (1).

9. Method as claimed in Claim 7 or 8, wherein the said calibration of the power transmitted by the telecommunications terminal (1) is carried out in order to store in a memory (M) of the terminal (1) a correspondence table between the power transmitted by the transmission path UMTS and he value of the gain of the receiver.

10. Method as claimed in any one of Claims 7 to 9, comprising a step of extension of the range of operation in reception, the analog radio frequency (ERF) using a local oscillator of the type having an extended range of operation in order to receive all of the signals transmitted in the transmission frequency band (UMTSTx).

11. Method as claimed in any one of Claims 7 to 10, comprising a step of isolation at the transmission frequency between the radio frequency coupler (15) and the analog radio frequency stage (ERF), the step of measurement (32, 33, 34) being carried out with a receiver without a band filter in reception.

12. Method as claimed in any one of Claims 9 to 11, wherein the transmission power is deduced from the receiver gain by transmitting at least one signal intended for a calibration, a step of switching using a radio frequency duplexer (12) being provided in order to avoid transmitting the calibration signal to the antenna (11).

13. Method as claimed in any one of Claims 1 to 6, **characterised in that** the step of measurement (32, 33, 34) comprises a step of transmission of signals between a first antenna (11) serving for the transmission of signals and a second antenna (110) connected to a GSM receiver (22), a step of initialisation of the said GSM receiver (22) being carried out beforehand in order to make this latter operate within a defined band of reception frequencies (PCSRx) corresponding substantially to the said band of transmission frequencies (UMTSTx).

14. Method as claimed in Claim 13, wherein the GSM receiver (22) receives by means of a duplexer switch (CDU), during a step of reception of the transmitted signals, a residual transmission power coming from the antenna (11) serving for the transmission of signals, this residual transmission power being detected by a demodulator (DG) of the GSM receiver.

15. Method as claimed in Claim 14, wherein a phase-locked loop provided for the demodulator (DG) of the GSM receiver makes the said demodulator (DG) operate within the said transmission frequency band (UMTSTx).

16. Method as claimed in any one of Claims 13 to 15, wherein the gain of the power amplifier (2) is imposed by means of a programming interface module (10) connected to the baseband processing unit (BB).

17. Method as claimed in any one of Claims 6 to 16, wherein the point of operation of the power amplifier (2) is lowered so long as the said step of evaluation (35, 36, 37) of quality indicates that the value obtained is higher than the desired threshold value, the resulting loss of gain of the amplifier (2) being compensated for by an increase in the gain of the modulator (MU) used for the transmission of signals.

18. Telecommunications terminal (1) enabling self-calibration of its transmission path in such a way as to control its transmission power, equipped with a baseband processing unit (BB), a means for amplification (2) in transmission capable of covering a predetermined range of powers and an antenna (11) in order to transmit signals in a defined transmission frequency band (UMTSTx), **characterised in that** it includes:
- a receiver in order to measure in the defined transmission frequency band (UMTSTx) information representing the average transmission power of the signals emitted;
- means for evaluation of the transmission quality of the signals consisting essentially of qualitatively evaluating the linearity of these signals as a function of a specification threshold of the ACLR type;
- at least one programming interface module (10, 210) connected to the baseband processing unit (BB) and capable of taking into account the comparison of the value evaluated by the said evaluation means with the desired threshold value in order to adjust the point of operation of the amplification means (2), the said programming interface module being provided on the one hand to program, at the receiver, a reference frequency (Fref) for an analog radio frequency stage (ERF) of the type including a phase-locked loop, and on the other hand to supply a gain control command (CDU) to a demodulator of this analog radio frequency stage (ERF);
- means for prior calibration of the power transmitted by the telecommunications terminal (1) under defined reference conditions; and
- means for correlation making it possible to deduce the transmission power from the receiver gain, the said receiver gain being imposed by means of the programming interface module (10, 210);
the programming interface module (10, 210) being capable of taking into account the comparison of the value evaluated by the said evaluation means with the desired threshold value in order to adjust the supply voltage (V) or the supply current of the amplification means (2).

19. Terminal as claimed in Claim 18, wherein the said amplification means is of the power amplifier type (2) of which the point of operation can be adjusted by modifying the supply voltage (V) or the supply current of the said amplifier, the programming interface module (10) being provided in order to compensate for variations in the power amplifier gain as a function of the measured information.

20. Terminal as claimed in either Claim 18 or Claim 19, wherein the programming interface module (10) is arranged in order to supply, during the lowering of the supply voltage (V) of the amplification means (2), a command for defined increase of the gain directed to a modulator (MU) connected to the input of the amplification means (2), in such a way as to compensate for the loss of gain due to the lowering of the supply voltage (V) for the amplification means (2).

21. Terminal as claimed in Claim 20, wherein the programming interface module (10) keeps the value of the gain of the modulator (MU) and the said supply voltage (V) unchanged so long as the value evaluated by the said evaluation means corresponds to the desired threshold value.

22. Terminal as claimed in any one of Claims 19 to 21, comprising a voltage converter (13) provided in order to adjust the said supply voltage (V) and disposed between the three following elements:
- a baseband processing unit (BB),
- a voltage supply output (100) connected to a supply source of the terminal (1), and
- the said power amplifier (2).

23. Terminal as claimed in Claim 22, comprising a processing stage (ETNE) disposed in the baseband processing unit (BB) in order to deliver control data (CPF) to the voltage converter (13) in such a way as to control the point of operation of the power amplifier (2).

24. Terminal as claimed in any one of Claims 19 to 23, comprising at the output of the power amplifier (29) a coupling circuit (16) connected to an isolation means (A2) controlled in order on the one hand to isolate the signal supplied by the coupling circuit (16) during the operating phases, and on the other hand to transmit by the coupling a fraction of the signal transmitted to the said evaluation means.

25. Terminal as claimed in any one of Claims 19 to 24, comprising means for adjustment of the value of the point of operation of the power amplifier (29) as a function of the result of the comparison supplied by the said evaluation means, the threshold value corresponding to a value specifying the ACLR ratio, the said threshold value being stored in a memory (M) of the terminal (1).

## Patentansprüche

1. Verfahren zum Autokalibrieren einer Sendekette eines Telekommunikationsendgerätes (1), zum Beispiel eines zellulären Mobiltelefons, das mit einem Sende-Verstärkungsmittel (2), das zum Abdecken eines vorbestimmten Leistungsbereichs geeignet ist, und mit einem Basisband-Verarbeitungsblock (BB) ausgestattet ist, wobei das Verfahren auf das Steuern der Sendeleistung des Endgerätes (1) in dem vorbestimmten Leistungsbereich abzielt und einen Schritt des Anpassens der Sendeleistung aufweist, wenn das Endgerät (1) über eine Antenne (11) Signale in einem bestimmten Sende-Frequenzband (UMTSTx) aussendet, **dadurch gekennzeichnet, dass** der Schritt des Anpassens der Sendeleistung aufweist:
- einen Schritt des Messens (32, 33, 34) der Informationen, die für die mittlere Sendeleistung der ausgesendeten Signale repräsentativ sind, in dem bestimmten Sende-Frequenzband (UMTSTx) mittels der Empfängerfunktion des Telekommunikationsendgerätes (1),
- einen Schritt des Evaluierens (35, 36, 37) der Sendequalität der Signale, der im Wesentlichen aus dem qualitativen Evaluieren der Linearität der Signale in Abhängigkeit von einer Spezifizierungsschwelle des ACLR-Typs besteht,
- solange der Schritt des Evaluierens (35, 36, 37) der Qualität angibt, dass der erhaltene Wert größer als der gewünschte Schwellenwert ist, einen Schritt (51) des Verringerns der Versorgungsspannung (V) oder des Verringerns des Versorgungsstroms des Verstärkungsmittels (2),
wobei mindestens eine Kalibrierung der von dem Telekommunikationsendgerät (1) ausgesendeten Leistung zuvor unter bestimmten Referenzbedingungen durchgeführt und zum Herleiten der Sendeleistung ausgehend von der Verstärkung des Empfängers genutzt wird, wobei die Empfängerverstärkung mittels eines Programmierungs-Schnittstellenmoduls (10) beaufschlagt wird, das mit dem Basisband-Verarbeitungsblock (BB) verbunden ist und einerseits das Programmieren auf Empfängerebene einer Referenzfrequenz (Fref) für eine analoge Funkfrequenzstufe (ERF) des Typs, der eine Phasenregelschleife aufweist, und andererseits das Ausgeben eines Befehls zur Steuerung der Verstärkung (CGDU) an einen Demodulator der analogen Funkfrequenzstufe (ERF) ermöglicht.

2. Verfahren gemäß Anspruch 1, wobei das Verstärkungsmittel (2) vom Typ eines Leistungsverstärkers ist, dessen Arbeitspunkt durch Modifizieren der Versorgungsspannung (V) oder des Versorgungsstroms des Verstärkers angepasst werden kann, wobei der Schritt (51) des Verringerns der Versorgungsspannung (V) oder des Versorgungsstroms zum Regulieren des Wertes der Verstärkung des Leistungsverstärkers in Abhängigkeit von den gemessenen Informationen vorgesehen ist.

3. Verfahren gemäß Anspruch 1 oder 2, wobei der Schritt (51) des Senkens der Versorgungsspannung (V) des Verstärkungsmittels (2) von einem Schritt (53) des bestimmten Erhöhens der Verstärkung eines Modulators (MU) begleitet wird, der mit dem Eingang des Verstärkungsmittels (2) verbunden ist, so dass der Verstärkungsverlust, der durch das Senken der Versorgungsspannung (V) für das Verstärkungsmittel (2) ausgelöst wird, kompensiert wird.

4. Verfahren gemäß einem der Ansprüche 1 bis 3,
wobei der Wert der Verstärkung und die Versorgungsspannung (V) unverändert gehalten werden, solange der Schritt des Evaluierens (35, 36, 37) der Sendequalität der Signale anzeigt, dass der erhaltene Wert dem gewünschten Schwellenwert entspricht.

5. Verfahren gemäß einem der Ansprüche 1 bis 4,
wobei der Schritt des Evaluierens (35, 36, 37) der Sendequalität der Signale aufweist:
- einen Schritt (35) des Bestimmens von zwei Verhältniszahlen zwischen einem ersten mittleren Leistungspegel in dem für das Senden genutzten Kanal und jeweils dem einen oder dem anderen von zwei zweiten mittleren Leistungspegeln in Abhängigkeit von den gemessenen Informationen für die Sendekanäle, die benachbart zu dem genutzten Kanal sind, und
- einen Schritt (36, 37) des Vergleichens der höchsten bei dem Bestimmungsschritt (35) erhaltenen Verhältniszahl mit der Spezifizierungsschwelle zum Ermöglichen des Evaluierens, ob der Arbeitspunkt des Leistungsverstärkers (2) ohne Veränderung der gesendeten Signale abgesenkt werden kann.

6. Verfahren gemäß einem der Ansprüche 2 bis 5,
wobei eine Verarbeitungsstufe (ETNE), die in dem Basisband-Verarbeitungsblock (BB) realisiert wird, einem Spannungswandler (13) Steuerdaten (CPF) zum Steuern des Arbeitspunktes des Leistungsverstärkers (2) bereitstellt, wobei der Spannungswandler (13) den Spannungsversorgungsausgang (100) von einer Versorgungsquelle des Endgerätes (1) empfängt.

7. Verfahren gemäß einem der Ansprüche 1 bis 6, **dadurch gekennzeichnet, dass** der Schritt des Messens (32, 33, 34) einen Schritt des Ableitens von Signalen mittels eines Funkfrequenzkopplers (16) zum Senden eines für die Sendeleistung repräsentativen Signals an eine analoge Funkfrequenzstufe (ERF) aufweist.

8. Verfahren gemäß Anspruch 7, wobei die analoge Funkfrequenzstufe (ERF) zum Empfangen der Signale in einem Frequenzband initialisiert wird, das im Wesentlichen dem Sendefrequenzband (UMTSTx) entspricht, das von dem Modulator-Demodulator des Endgerätes (1) genutzt wird.

9. Verfahren gemäß Anspruch 7 oder 8, wobei die Kalibrierung der von dem Telekommunikationsendgerät
(1) gesendeten Leistung zum Speichern einer Tabelle der Entsprechungen zwischen der von der UMTS-Sendekette ausgesendeten Leistung und dem Wert der Verstärkung des Empfängers in einem Speicher (M) des Endgerätes (1) realisiert wird.

10. Verfahren gemäß einem der Ansprüche 7 bis 9, das einen Schritt des Erweiterns des Empfangs-Funktionsbereichs aufweist, wobei die analoge Funkfrequenzstufe (ERF) einen lokalen Oszillator des Typs mit erweitertem Funktionsbereich zum Empfangen der Gesamtheit der in dem Sende-Frequenzband (UMTSTx) gesendeten Signale verwendet.

11. Verfahren gemäß einem der Ansprüche 7 bis 10, das einen Schritt des Isolierens auf der Sendefrequenz zwischen dem Funkfrequenzkoppler (16) und der analogen Funkfrequenzstufe (ERF) aufweist,
wobei der Schritt des Messens (32, 33, 34) mit einem Empfänger ohne Bandfilter beim Empfangen realisiert wird.

12. Verfahren gemäß einem der Ansprüche 9 bis 11, wobei die Sendeleistung von der Empfängerverstärkung durch Übertragen mindestens eines für eine Kalibrierung bestimmten Signals hergeleitet wird, wobei ein Schritt des Vermittelns mittels eines Funkfrequenz-Duplexers (12) zum Verhindern des Sendens des Kalibrierungssignals an die Antenne (11) vorgesehen ist.

13. Verfahren gemäß einem der Ansprüche 1 bis 6, **dadurch gekennzeichnet, dass** der Schritt des Messens (32, 33, 34) einen Schritt des Sendens von Signalen zwischen einer ersten Antenne (11), die zum Senden der Signale dient, und einer zweiten Antenne (110), die mit einem GSM-Empfänger (22) verbunden ist, aufweist, wobei vorher ein Schritt des Initialisierens des GSM-Empfängers (22) durchgeführt wird, zum Bewirken, dass letzterer in einem bestimmten Empfangsfrequenzband (PCSRx) funktioniert, das im Wesentlichen dem Sendefrequenzband (UMTSTx) entspricht.

14. Verfahren gemäß Anspruch 13, wobei der GSM-Empfänger (22) mittels eines Duplex-Kommutators (CDU) während eines Schrittes des Empfangens der gesendeten Signale eine Rest-Sendeleistung empfängt, die aus der Antenne (11) stammt, die zum Senden der Signale dient, wobei die Rest-Sendeleistung von einem Demodulator (DG) des GSM-Empfängers detektiert wird.

15. Verfahren gemäß Anspruch 14, wobei eine Phasenregelschleife, die für den Demodulator (DG) des GSM-Empfängers vorgesehen ist, bewirkt, dass der Demodulator (DG) in dem Sendefrequenzband (UMTSTx) funktioniert.

16. Verfahren gemäß einem der Ansprüche 13 bis 15, wobei die Verstärkung des Leistungsverstärkers (2) mittels eines Programmierungs-Schnittstellenmoduls (10) bewirkt wird, das mit dem Basisband-Verarbeitungsmodul (BB) verbunden ist.

17. Verfahren gemäß einem der Ansprüche 6 bis 16, wobei der Arbeitspunkt des Leistungsverstärkers (2) abgesenkt ist, solange der Schritt des Evaluierens (35, 36, 37) der Qualität angibt, dass der erhaltene Wert größer als der gewünschte Schwellenwert ist, wobei der daraus folgende Verstärkungsverlust des Verstärkers (2) durch eine Erhöhung der Verstärkung des Modulators (MU) kompensiert wird, der für das Senden der Signale genutzt wird.

18. Telekommunikationsendgerät (1), das ein Autokalibrieren seiner Sendekette zum Steuern seiner Sendeleistung ermöglicht, das mit einem Basisband-Verarbeitungsblock (BB), einem Sende-VerstärkungsMittel (2), das zum Abdecken eines vorbestimmten Leistungsbereichs geeignet ist, und mit einer Antenne (11) zum Senden von Signalen in einem bestimmten Frequenzband (UMTSTx) ausgestattet ist, **dadurch gekennzeichnet, dass** es aufweist:
- einen Empfänger zum Messen von Informationen, die für die mittlere Sendeleistung der gesendeten Signale repräsentativ sind, in dem bestimmten Sendefrequenzband (UMTSTx),
- Mittel zum Evaluieren der Sendequalität der Signale zum qualitativen Evaluieren der Linearität der Signale in Abhängigkeit von einer Spezifizierungsschwelle des ACLR-Typs,
- mindestens ein Programmierungs-Schnittstellen-Modul (10, 210), das mit dem Basisband-Verarbeitungsblock (BB) verbunden ist und zum Berücksichtigen des Vergleichs des mittels der Evaluierungsmittel evaluierten Wertes mit dem gewünschten Schwellenwert zum Anpassen des Arbeitspunktes des Verstärkungsmittels (2) geeignet ist, wobei das Programmierungs-Schnittstellen-Modul einerseits zum Programmieren, auf Ebene des Empfängers, einer Referenzfrequenz (Fref) für eine analoge Funkfrequenzstufe (ERF) des Typs, der eine Phasenregelschleife aufweist, und andererseits zum Ausgeben eines Verstärkungssteuerungsbefehls (CGDU) an einen Demodulator der analogen Funkfrequenzstufe (ERF) vorgesehen ist,
- Mittel zum vorherigen Kalibrieren der von dem Endgerät (1) ausgegebenen Leistung unter bestimmten Referenzbedingungen, und
- Korrelierungsmittel, die das Ableiten der Sendeleistung aus der Empfängerverstärkung ermöglichen, wobei die Empfängerverstärkung mittels des Programmierungs-Schnittstellen-Moduls (10, 210) beaufschlagt wird,
wobei das Programmierungs-Schnittstellen-Modul (10, 210) zum Berücksichtigen des Vergleichs des von den Evaluierungsmitteln evaluierten Wertes mit dem gewünschten Schwellenwert zum Anpassen der Versorgungsspannung (V) oder des Versorgungsstroms des Verstärkungsmittels (2) geeignet ist.

19. Endgerät gemäß Anspruch 18, wobei das Verstärkungsmittel vom Typ eines Leistungsverstärkers (2) ist, dessen Arbeitspunkt durch Modifizieren der Versorgungsspannung (V) oder des Versorgungsstroms angepasst werden kann, wobei das Programmierungs-Schnittstellen-Modul (10) zum Kompensieren der Verstärkungsschwankungen des Leistungsverstärkers in Abhängigkeit von den gemessenen Informationen vorgesehen ist.

20. Endgerät gemäß Anspruch 18 oder 19, wobei das Programmierungs-Schnittstellen-Modul (10) zum Ausgeben eines Befehls für eine bestimmte Erhöhung der Verstärkung an einen Modulator (MU), der mit dem Eingang des Verstärkungsmittels (2) verbunden ist, im Fall des Absinkens der Versorgungsspannung (V) des Verstärkungsmittels (2) vorgesehen ist, so dass der durch das Sinken der Versorgungsspannung (V) für das Verstärkungsmittel (2) ausgelöste Verstärkungsverlust kompensiert wird.

21. Endgerät gemäß Anspruch 20, wobei das Programmierungs-Schnittstellen-Modul (10) den Wert der Verstärkung des Modulators (MU) und die Versorgungsspannung (V) unverändert aufrechterhält, solange der von den Evaluierungsmitteln evaluierte Wert dem gewünschten Schwellenwert entspricht.

22. Endgerät gemäß einem der Ansprüche 19 bis 21, das einen Spannungswandler (13) aufweist, der zum Anpassen der Versorgungsspannung (V) vorgesehen ist und zwischen den drei folgenden Elementen angeordnet ist:
- einem Basisband-Verarbeitungsblock (BB),
- einem Spannungsversorgungsausgang (100), der mit einer Versorgungsquelle des Endgerätes (1) verbunden ist, und
- dem Leistungsverstärker (2).

23. Endgerät gemäß Anspruch 22, das eine Verarbeitungsstufe (ETNE) aufweist, die in dem Basisband-Verarbeitungsblock (BB) angeordnet ist, zum Ausgeben von Steuerdaten (CPF) an den Spannungswandler (13) zum Steuern des Arbeitspunktes des Leistungsverstärkers (2).

24. Endgerät gemäß einem der Ansprüche 19 bis 23, das am Ausgang des Leistungsverstärkers (2) einen Kopplungsschaltkreis (16) aufweist, der mit einem Isolierungsmittel (A2) verbunden ist, das einerseits zum Isolieren des von dem Kopplungsschaltkreis (16) ausgegebenen Signals während der Funktionsphasen und andererseits zum Übertragen eines Teils des ausgegebenen Signals an die Evaluierungsmittel durch die Kopplung gesteuert wird.

25. Endgerät gemäß einem der Ansprüche 19 bis 24, das Mittel zum Anpassen des Wertes des Arbeitspunktes des Leistungsverstärkers (2) in Abhängigkeit von dem Ergebnis des von den Evaluierungsmitteln bereitgestellten Vergleichs aufweist, wobei der Schwellenwert einem Wert zum Spezifizieren der Verhältniszahl ACLR entspricht,
wobei der Schwellenwert in einem Speicher (M) des Endgerätes (1) gespeichert ist.
